Europäisches Patentamt

European Patent Office

Office européen des brevets

(19)

(11) Numéro de publication: **0 014 139 B1**

(12) **FASCICULE DE BREVET EUROPEEN**

(45) Date de publication du fascicule du brevet: **12.06.85**

(51) Int. Cl.⁴: **F 16 H 47/08**

(21) Numéro de dépôt: **80400082.6**

(22) Date de dépôt: **18.01.80**

(54) Transmission à variation continue du rapport de transmission.

(30) Priorité: **23.01.79 FR 7902390**
**23.07.79 FR 7918973**

(43) Date de publication de la demande:
**06.08.80 Bulletin 80/16**

(45) Mention de la délivrance du brevet:
**12.06.85 Bulletin 85/24**

(84) Etats contractants désignés:
**BE DE GB IT NL SE**

(56) Documents cités:
**DE - A - 2 637 895**
**US - A - 2 312 105**
**US - A - 3 241 400**
**US - A - 3 455 185**
**US - A - 3 789 697**

(73) Titulaire: **Plas, Gérard, Domaine du Triadou, F-34190 St Bauzille De Putois (FR)**
Titulaire: **Plas, Patrick, Domaine du Triadou, F-34190 St Bauzille De Putois (FR)**

(72) Inventeur: **Plas, Gérard, Domaine du Triadou, F-34190 St Bauzille De Putois (FR)**
Inventeur: **Plas, Patrick, Domaine du Triadou, F-34190 St Bauzille De Putois (FR)**

## Description

La présente invention s'applique plus particulièrement aux véhicules automobiles nécessitant une variation continue du rapport de transmission.

La présente invention se propose de parvenir à ce but par une combinaison de trains planétaires et de moyens hydrauliques.

A l'heure actuelle les transmissions connues, le plus couramment en service font appel à des systèmes à courroie, à friction ou encore hydrauliques. Ces transmissions sont souvent limitées en plage ou dans l'importance du couple qu'elles peuvent transmettre et parfois les deux à la fois; les transmissions hydrauliques sont en outre d'un assez mauvais rendement.

L'état de la technique proprement dit peut être illustré par le US-A-3 241 400 qui comporte un convertisseur de couple hydrocinétique et deux trains planétaires, tel que l'arbre mène un planétaire du premier train, un planétaire du second train étant solidaire en rotation du second planétaire du premier train par le moyen d'un arbre lui-même solidaire en rotation de l'impulseur du convertisseur de couple, les portes satellites des deux trains étant solidaires en rotation par le moyen d'une transmission démultiplicatrice elle-même solidaire en rotation de la turbine du convertisseur, le second planétaire du second train transmettant le couple en sortie. Les éléments constitutifs du dispositif revendiqué sont les mêmes que ceux du dispositif cité, par contre leur agencement est fondamentalement différent, ce qui entraîne des différences de structures et de fonctionnement telles que les deux dispositifs ne peuvent être comparés.

1. L'arbre d'entrée qui dans le dispositif revendiqué entraîne le porte-satellites du premier train, entraîne un planétaire dans le dispositif cité.

2. L'arbre d'entrée mène directement l'impulseur du convertisseur dans le dispositif revendiqué et ne le mène pas dans le dispositif cité, dans lequel c'est l'arbre d'intermédiare qui mène ledit impulseur.

3. Dans le dispositif revendiqué la turbine du convertisseur est solidaire en rotation de la transmission intermédiaire du rapport le plus long tandis que dans le dispositif cité ladite turbine est solidaire en rotation de la transmission intermédiaire du rapport le plus court.

Le but de la présente invention est donc de proposer une transmission à variation continue qui offre une grande plage de conversion et puisse transmettre des couples élévés sans glissement avec un excellent rendement.

Selon l'invention la transmission à variation continue du rapport de transmission, notamment pour véhicules automobiles, comporte un arbre d'entrée, deux trains planétaires et un convertisseur de couple hydrocinétique, un planétaire du premier train étant lié en rotation avec un planétaire du second train par une première transmission intermédiaire, l'un des autres éléments du premier train étant liée en rotation avec l'un des autres éléments du second train par une seconde transmission intermédiaire, le troisième élément du second train transmettant le couple en sortie, caractérisé en ce que l'arbre d'entrée mène simultanément le porte-satéllites du premier train et l'impulseur du convertisseur de couple, et en ce que la turbine du convertisseur de couple est liée en rotation avec la première transmission intermédiaire qui présente un rapport supérieur à celui de la seconde transmission intermédiaire.

Selon un premier mode de réalisation, les deux trains planétaires sont des différentiels et le porte-satellites du second train est accouplé au second planétaire du premier train tandis que le second planétaire du second train transmet le couple en sortie.

De préférence, l'accouplement entre le porte-satellites du second train et le second planétaire du premier train est constitué par une transmission réductrice inversant le sens de rotation en sortie.

Selon un deuxième mode de réalisation, les deux trains planétaires sont des trains épicycloïdaux et le pignon central du second train est solidaire en rotation de la couronne du premier train tandis que le porte-satellites du second train transmet le couple en sortie, les deux trains et le convertisseur étant juxtaposés coaxialement.

Enfin, selon une variante du second mode de réalisation, un train épicycloïdal supplémentaire multiplicateur est interposé entre, d'une part, la turbine du convertisseur et, d'autre part, les planétaires solidaires des deux trains.

L'invention va maintenant être décrite plus en détail en se référant à des modes de réalisation particuliers cités à titre d'exemples non limitatifs et représentés schématiquement sur les dessins annexés dans lesquels:

La fig. 1 représente un schéma du principe de la transmission selon l'invention.

Fig. 2 représente un premier mode de réalisation de la transmission, avec différentiels.

Fig. 3 représente une variante de la transmission de la fig. 2.

Fig. 4 représente un deuxième mode de réalisation avec trains épicycloïdaux.

Fig. 5 représente une variante de la transmission de la fig. 4.

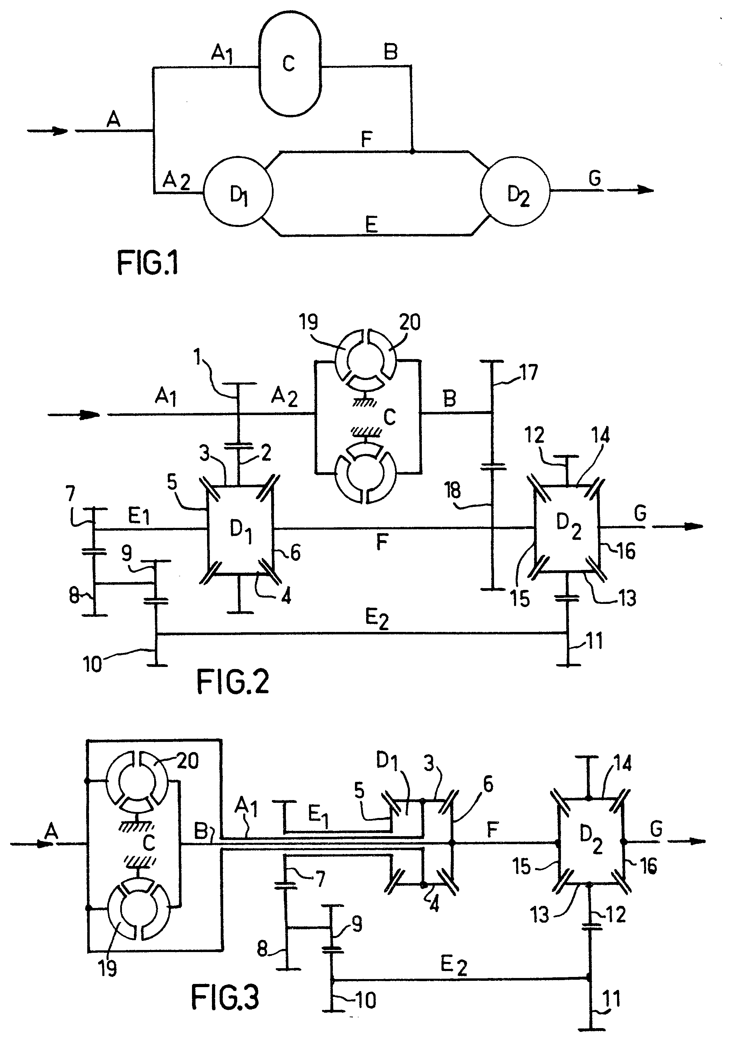

Tel qu'illustré sur le schéma de la fig. 1, la transmission selon l'invention est essentiellement constituée par deux trains planétaires associés à un convertisseur de couple hydrocinétique C, les deux trains planétaires pouvant être soit deux différentiels $D_1$ et $D_2$ soit deux trains épicycloïdaux, considérés comme des équivalents et désignés ci-après par le vocable «différentiel».

Du fait qu'il dispose de trois accouplements, un train planétaire est capable d'analyser une impulsion ou d'en synthétiser deux:

— soit que, mené par une impulsion motrice, il la fractionne et la répartisse sur ses deux autres accouplements en fonction du rapport des deux couples résistants qui l'affrontent sur ces deux derniers accouplements,

— soit que, mené par deux impulsions motrices, il les totalise pour générer une seule impulsion résultante sur son troisième accouplement.

Le différentiel $D_1$ étant animé par l'arbre menant A, les deux différentiels $D_1$ et $D_2$ sont liés entre eux et réagissent l'un sur l'autre par quatre de leurs éléments constitutifs deux à deux au moyen de deux transmissions intermédiaires F et E de rapports différents et de valeurs aussi éloignées l'une de l'autre que possible (on admettra que le rapport de F est supérieur à celui de E). L'arbre menant A qui anime $D_1$ anime également le convertisseur de couple hydraulique C dont la sortie menante B est solidaire de la transmission F la plus directe. Le troisième élément de $D_2$, G, constitue la sortie menante du dispositif.

Avec la transmission selon l'invention, l'agencement réciproque du convertisseur et des deux différentiels est tel que:
— $D_1$ puisse fractionner et répartir différentiellement l'impulsion motrice initiale qu'il reçoit de l'arbre menant A sur les transmissions F et E,
— $D_2$ puisse synthétiser les impulsions différentielles issues de $D_1$ converties et transmises par les deux transmissions F et E qui l'animent ($D_2$), et
— C, qui matérialise le couple moteur et ses variations par un couple résultant qu'il exprime sur B, puisse s'opposer au couple résistant qui se matérialise sur F, et, donc, que C, sensible à ce couple résistant et à ses variations, puisse servir de siège à l'affrontement du couple moteur et du couple résistant, les synthétisant dans un couple résultant directeur qui déterminera et conduira la variation.

Avec la transmission selon l'invention, il y a transmission et conversion de l'impulsion motrice initiale, avec conversion de cette impulsion motrice initiale de façon continue et variable tel que la vitesse résultante est obtenue sans glissement.

La plage de variation peut être aussi étendue qu'on peut le souhaiter et la variation est fonction des variations du régime moteur et des variations du couple résistant.

Dans le mode de réalisation représenté sur la fig. 2, l'arbre menant $A_1$ relié au moteur entraîne en rotation la cage du différentiel $D_1$ par l'intermédiaire du pignon 1 en prise avec la couronne dentée 2 solidaire de ladite cage. Simultanément, l'arbre $A_1$ entraîne l'impulseur 19 du convertisseur C auquel il est relié.

Le planétaire 6 de $D_1$ est solidaire du planétaire 15 du différentiel $D_2$ par l'arbre F qui transmet la vitesse sans modification. L'arbre F est lui-même solidaire de la turbine 20 du convertisseur par l'intermédiaire des engrenages 17 et 18 qui ont le double rôle de transmettre le couple du convertisseur C par un mouvement rotatif de même sens que celui des planétaires 6 et 15 tel qu'il est indiqué, de telle sorte que le couple de C puisse s'opposer au couple résistant et accorder la vitesse maximum du convertisseur avec la vitesse maximum de F pour une même vitesse de A lorsque $D_1$ distribue sur son planétaire 6 la totalité de l'impulsion génératrice, c'est-à-dire quand le planétaire 5 de $D_1$ est immobilisé.

Le planétaire 5 de $D_1$ est, lui, solidaire de la cage de $D_2$ qu'il anime par l'intermédiaire d'une transmission E, réductrice, constituée de: $E_1$, 7, 8, 9, 10, $E_2$, 11 et 12. Compte tenu du fait que le rôle de $D_2$ est de faire la somme des impulsions transmises par F et E et que ces impulsions sont transmises à $D_2$ par la cage et un de ses planétaires 15, il est nécessaire que la cage de $D_2$ tourne en sens contraire du planétaire 15, ce qui explique la présence sur cette ligne de transmission E d'un engrenage d'inversion constitué par les pignons 9 et 10. Enfin, le planétaire 16 de $D_2$ accouplé à l'arbre G mené constitue la sortie menante de la transmission selon l'invention.

Dans la variante représentée sur la fig. 3, on retrouve les mêmes organes comportant les mêmes références que précédemment mais le convertisseur C est disposé en ligne avec les deux différentiels $D_1$ et $D_2$ de manière à réduire l'encombrement. Selon cette variante, l'impulseur 19 du convertisseur est directement relié à la cage du premier différentiel $D_1$ sans passer par les engrenages 1 et 2 précités et, de même, la turbine 20 du convertisseur est directement accouplée aux planétaires 6 et 15 sans les engrenages 17 et 18 mentionnés précédemment.

La transmission selon ce premier mode de réalisation et sa variante fonctionne de la façon suivante.

Le moteur entraîne le premier différentiel $D_1$, et l'impulsion motrice est fractionnée et répartie sur les deux voies menées de $D_1$ suivant une proportion qui est fonction de la résistance que le convertisseur oppose au couple résistant sur la voie F de rapport supérieur, le convertisseur jouant le rôle de contrepoids de valeur variable. Plus le convertisseur oppose un couple faible au couple résistant, plus importante est la fraction de la vitesse transmise par E (rapport le plus petit), donc plus grande est la multiplication du couple moteur et inversement.

La transmission F transmet la fraction de vitesse qui l'emprunte suivant un rapport de démultiplication maximal tandis que la transmission E transmet l'autre fraction différentielle de la vitesse suivant un rapport de démultiplication inférieur minimum.

$D_2$ a pour fonction de réaliser la somme de ces deux fractions d'impulsion après conversion éventuelle de l'une ou de l'autre et par conséquent la somme des couples résultants ainsi transmise, suivant les spécifications particulières des réalisations pratiques, somme que $D_2$ matérialise sous la forme d'une vitesse et d'un couple sur son accouplement G.

Si la vitesse initiale et par conséquent le couple moteur correspondant empruntent à 100% la transmission E réductrice, la vitesse sera théoriquement démultipliée au maximum. Dans le cas contraire, si la même vitesse initiale emprunte à 100% la transmission F, la vitesse transmise correspondra au maximum théorique possible et le couple au minimum, ceci pour une même vitesse et un même couple initial.

Ce dispositif permet d'évoluer entre ces deux extrêmes suivant tous les cas intermédiaires; en outre, dans le cas où le couple transmis par le convertisseur est inférieur au couple résistant, même qu'il est positif, tout ou partie de l'impulsion transmise à $D_2$ par la transmission E retourne à $D_1$ par la voie F qui tourne alors en sens contraire de la cage de $D_1$, tandis que $D_2$ ne transmet à sa sortie G que la fraction de l'impulsion reçue de la transmission E compatible avec le rapport des couples antagonistes du convertisseur et du couple résistant.

Dans l'exemple de la fig. 2, l'arbre $A_1$ mène la cage de $D_1$ par l'intermédiaire des pignons 1 et 2. En fonction du rapport des couples du convertisseur et du couple résistant qui s'exprime sur l'arbre F par le jeu des pignons 17 et 18, $D_1$ fractionne et répartit la vitesse reçue par la cage, multipliée par deux, sur les voies F et E, et par conséquent les fractions de couple correspondant. L'impulsion qui emprunte la transmission F ne subit aucune conversion puisque F est un arbre, tandis que l'autre fraction différentielle qui emprunte la transmission E subit une réduction de la vitesse, donc une augmentation du couple d'une valeur donnée, à déterminer suivant les cas d'application. La transmission E, réductrice, comme il a été dit, comporte en outre un engrenage constitué des pignons 9 et 10 destiné à inverser le sens de rotation de façon que la cage de $D_2$ tourne bien en sens contraire de la cage de $D_1$, et par conséquent des planétaires 6 et 15. La fraction et l'impulsion qui emprunte la transmission F anime le planétaire 15 de $D_2$ tandis que l'autre fraction différentielle transmise par E anime, après réduction de la vitesse, la cage de $D_2$ en sens contraire, ce qui conduit $D_2$ à effectuer la somme des deux fractions sur le planétaire 16, donc sur l'arbre G.

Au démarrage du moteur, voiture à l'arrêt, l'impulseur 19 du convertisseur C tourne trop lentement et ce dernier n'oppose aucun couple au couple résistant. La totalité de l'impulsion motrice est transmise par E réductrice et anime la cage de $D_2$ où l'impulsion se heurte au couple résistant. Le planétaire 16 reste immobile et le planétaire 15 tourne alors dans le sens inverse du sens indiqué sur la fig. 2, le planétaire 6 de $D_1$ tourne donc lui aussi en sens contraire, ce qui conduit $D_1$ à totaliser cette impulsion en retour avec celle qu'il reçoit directement du moteur; le planétaire 16 est alors immobilisé.

Lorsque la vitesse de rotation de l'impulsion 19 du convertisseur est telle que ce dernier oppose un couple au couple résistant, bien que ce couple soit encore inférieur au couple résistant, le planétaire 15 est alors freiné et une fraction de l'impulsion convertie par E et $D_2$ est transmise au planétaire 16, donc à G. On peut assimiler cette phase à une phase d'embrayage.

Puis, le convertisseur atteint sa vitesse de calage et ne transmet alors aucune vitesse, mais le couple de la turbine 20, variable suivant les types d'appareils, est voisin de 2, 5 et la turbine est immobile. Le couple de la turbine 20 est alors égal au couple résistant que l'annule, et par conséquent F, les planétaires 6 et 15 sont immobiles. Il en résulte que la totalité de l'impulsion transmise et convertie par E et $D_2$ s'exprime sur le planétaire 16, donc sur la sortie menante du dispositif; la vitesse est alors réduite au minimum pour un couple maximum, c'est en théorie le rapport minimum.

Lorsque la vitesse de rotation de l'impulseur 19 du convertisseur augmente encore à mesure que l'inertie est vaincue, le couple résistant diminuant et l'influence du couple du convertisseur qui l'équilibre augmentant, ce dernier peut alors épauler activement la transmission F qui s'anime, en même temps que l'arbre B, d'une certaine vitesse. Une fraction de l'impulsion motrice est transmise alors par le planétaire 6, donc F et le planétaire 15 qui se mettent en révolution dans le sens indiqué dans l'exemple de la fig. 2, tandis que l'autre fraction de l'impulsion motrice transmise par E entraîne la cage de $D_2$ qui tourne alors en sens inverse du planétaire 15, ce qui permet à $D_2$ de faire la somme des deux fractions, après conversion sur son planétaire 16, donc sur la sortie G du dispositif.

Si le processus se poursuit dans le même sens, le couple du convertisseur est alors suffisant pour annuler les effets du couple résistant: c'est le couplage. 100% de l'impulsion motrice est transmis par F, le planétaire 5 est immobile, donc E et la cage de $D_2$. Le planétaire 16 et l'arbre G tournent à la même vitesse que le planétaire 15 mais en sens contraire.

Si le moteur ralentit ou si le couple résistant augmente, le processus décrit précédemment s'effectue en sens inverse.

Si le moteur accélère ou si le couple résistant diminue, le processus décrit s'effectue de nouveau en montée.

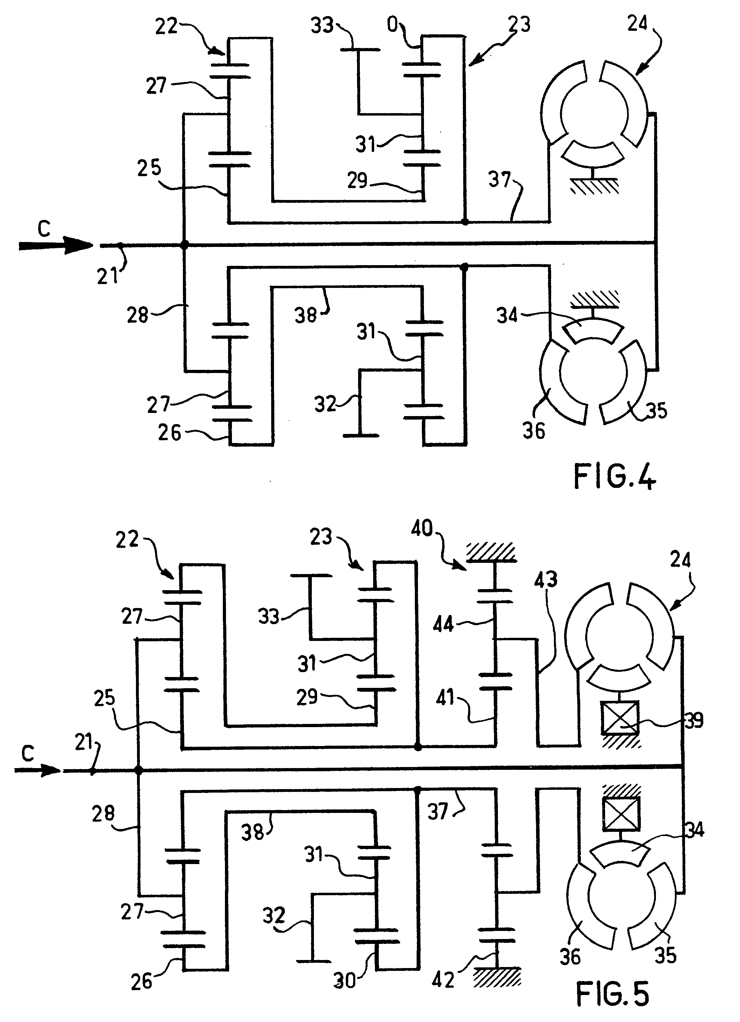

Selon le second mode de réalisation avec trains épicycloïdaux tel que représenté sur la fig. 4, la transmission continue selon l'invention comporte un arbre d'entrée 21 sur lequel est appliqué le couple à transmettre, un premier train d'engrenages épicycloïdal 22, un second train d'engrenages épicycloïdal 23 et un convertisseur de couple hydrocinétique 24, les deux trains et le convertisseur étant juxtaposés coaxialement avec l'arbre d'entrée 21.

De manière connue en soi, les deux trains 22 et 23 comportent chacun un pignon planétaire central, respectivement 25 et 29, une couronne planétaire extérieure, respectivement 26 et 30, et des pignons satellites, respectivement 27 et 31, portés par les porte-satellites 28 et 32.

De manière également bien connue en soi, le convertisseur comporte un stator de réacteur 34, un impulseur 35 et une turbine 36, le stator du réacteur pouvant être immobilisé en rotation dans les deux sens ou seulement dans un seul sens dans le cas où il est monté sur un mécanisme à roue libre ou à cliquets.

Les deux trains et le convertisseur sont juxtaposés et leurs axes de rotation sont alignés avec l'axe d'entrée 21 sur lequel sont clavetés à la fois le porte-satellites 28 du premier train et l'impulseur 35 du convertisseur. De plus, le pignon central planétaire 25 du premier train 22, la couronne extérieure 30 du second train 23 et la turbine 36 de l'impulseur sont clavetés sur un arbre tubulaire 37 coaxial à l'arbre d'entrée 21 et traversé par celui-ci. Quant à la couronne extérieure 26 du premier train 22 et au pignon planétaire 29 du second train 23, ils sont tous deux clavetés sur un même arbre tubulaire 38 coaxial aux arbres 21 et 37 et traversé longitudinalement par ceux-ci de part en part.

Le porte-satellites 32 du second train épicycloïdal 23 porte une roue dentée 33 qui transmet le couple en sortie.

Bien entendu, l'ensemble des éléments est logé dans un carter, non représenté, qui supporte les paliers des différents arbres.

Le choix et la disposition des différents organes selon l'invention permettent d'obtenir une transmission à large plage de démultiplication grâce aux trains épicycloïdaux qui la composent, ladite transmission ayant une compacité telle qu'elle est plus particulièrement destinée à équiper des véhicules automobiles.

La transmission selon ce second mode de réalisation fonctionne de la façon suivante.

Du fait de l'association particulière des différents organes entre eux, le couple moteur appliqué sur l'arbre d'entrée 21, le porte-satellites 28 et les satellites 27 du premier train 22 est transmis aux satellites 31, au porte-satellites 32 et à la roue dentée de sortie 33, le long de deux voies de transmission E et F, la première voie E étant composée essentiellement de la couronne 26 du premier train 22 ainsi que du pignon planétaire 29 du second train 23, tandis que la seconde voie F se compose essentiellement du pignon central planétaire 25, du premier train et de la couronne extérieure 30 du second train épicycloïdal 23, le convertisseur de couple hydrocinétique n'intervenant que pour répartir le couple moteur, entre ces deux voies de transmission E et F, en fonction du rapport des couples moteur et résistant.

Le convertisseur n'a donc pas pour fonction de transmettre un couple comme c'est habituellement son rôle mais de diviser le couple moteur principal en deux couples auxiliaires complémentaires et de répartir et aiguiller chacun de ces couples auxiliaires le long d'une des deux voies de transmission E et F.

Au démarrage de l'arbre d'entrée, l'impulseur 35 du convertisseur tourne lentement et la turbine 36 n'oppose pratiquement aucun couple au couple résistant s'exerçant sur la roue de sortie 33, si bien que la quasi totalité du couple à transmettre passe par la voie la plus démultipliée, c'est-à-dire par la couronne 26, l'arbre 38 et le planétaire central 29. Comme la roue de sortie 33 et le porte-satellites 32 restent pratiquement immobiles, la rotation du planétaire 29 entraîne celle en sens inverse de la couronne 30 du second train par l'intermédiaire des satellites 31 ainsi que les rotations également en sens inverse de la turbine 36 du convertisseur et du planétaire central 25 du premier train 22.

A mesure que la vitesse augmente, le convertisseur se durcit et, par l'intermédiaire de sa turbine 36 et de la couronne extérieure 30, il oppose une certaine résistance à la rotation des satellites sur eux-mêmes, ce qui se traduit par un couple moteur sur la roue de sortie 33 et l'entraînement en rotation de ladite roue. On est alors en phase d'embrayage qui se poursuit jusqu'à ce que la rotation en sens inverse de la turbine 36 s'arrête, le convertisseur ayant alors atteint sa vitesse de calage et sa turbine étant immobile. La démultiplication est alors maximum en fonctionnement embrayé et la transmission se fait entièrement par l'intermédiaire de la couronne 26 du premier train 22, l'arbre tubulaire 38 et le pignon planétaire central 29 du second train 23.

Si la vitesse de rotation de l'arbre d'entrée 21 augmente encore, la turbine 36 du convertisseur 24 est entraînée en rotation dans le même sens que l'impulseur 35 et elle épaule le planétaire 25 du train 22 et la couronne 30 du train 23. A mesure que la vitesse de l'arbre 21 augmente, la vitesse de la turbine 36 augmente également jusqu'à atteindre sensiblement celle de l'impulseur 35. Il y a alors couplage du convertisseur.

Depuis le calage du convertisseur jusqu'au couplage, la réduction de la vitesse transmise diminue de manière continue; au couplage, la quasi totalité du nombre de tours de l'arbre d'entrée 21 est transmise à la roue de sortie 33 par la voie multipliée et l'on obtient alors la vitesse maximum pour un couple minimum.

On remarquera que la transmission selon l'invention est à la fois démultiplicatrice durant une certaine phase de son fonctionnement et multiplicatrice durant une autre phase de la variation. En conséquence, sa mise en œuvre peut nécessiter l'insertion d'un réducteur en amont ou en aval du dispositif de variation proprement dit de façon à obtenir une vitesse angulaire de sortie qui soit compatible avec les conditions spécifiques d'emploi.

En outre, suivant les conditions d'emploi, la valeur du couple résistant et la caractéristique du moteur, il est nécessaire de faire coïncider la vitesse de calage du convertisseur de couple hydrocinétique et la vitesse du moteur pour son couple maximum. Pour ce faire, on pourra être amené à jouer sur les dimensions du convertisseur pour avancer ou retarder son point de calage par rapport à la vitesse de l'impulseur si l'on désire ne pas agir par ajustement de vitesse. En augmentant ou en diminuant le diamètre du convertisseur, on agit sur la force centrifuge et, partant, sur l'efficacité du convertisseur pour des conditions d'emploi constantes.

Cependant, s'il n'existe pas d'appareil de la dimension souhaitée pour atteindre ce but ou si l'on ne désire pas en fabriquer, ou pourra également ment démultiplier la vitesse de l'impulseur 35 par tous les moyens connus. Dans ce cas, il faudra alors surmultiplier la vitesse de la turbine 36 d'une valeur équivalente avant de lui faire attaquer la couronne 30 du train épicycloïdal 23 sous peine d'amputer l'étendue de variation du dispositif d'une plage appréciable.

Une telle surmultiplication de la vitesse de la turbine 36 est obtenue dans la transmission représentée en variante sur la fig. 5. Sur celle-ci, un train épicycloïdal supplémentaire 40 a été intercalé entre la turbine 36 du convertisseur et l'arbre 37 sur lequel le pignon planétaire 25 du premier train 22 et la couronne planétaire extérieure 30 du second train 23 sont calés. En fait, la turbine 36 est solidaire en rotation du porte-satellites 43 du train 40 et elle transmet une vitesse surmultipliée au pignon planétaire central 41 par l'intermédiaire des satellites 44 qui s'appuient sur la denture de la couronne planétaire extérieure 42 qui est immobilisée en rotation. Le pignon central 41 est claveté sur l'arbre tubulaire 37 sur lequel sont également clavetés à la fois le pignon planétaire central 25 du train 22 et la couronne planétaire 30 du train 23.

A noter que le réacteur 34 est monté dans cet exemple sur une roue libre 39 au lieu d'être absolument immobilisé comme dans la transmission de la fig. 4.

D'une façon générale, grâce à l'interposition de ce train épicycloïdal intercalaire multiplicateur 40 entre la turbine 36 du convertisseur et l'arbre de liaison entre le pignon 25 et la couronne 30, on accorde la vitesse de la turbine à son régime maximum avec la vitesse maximum de ladite couronne 30 et du pignon 25, ce qui permet d'utiliser de manière optimale la transmission en profitant de toute l'étendue de sa plage possible de variation.

Enfin, si l'on ne souhaite pas compliquer la chaîne cinématique de la transmission selon l'invention par l'adjonction de ce train épicycloïdal multiplicateur supplémentaire 40, il existe encore un autre moyen de parvenir au résultat souhaité ci-dessus, ce moyen consistant à démultiplier la vitesse angulaire de l'arbre 21 de la valeur souhaitée pour que la vitesse de l'impulseur 35 au calage corresponde à la vitesse du moteur au couple maximum.

C'est ainsi que les figs 4 et 5 représentent un montage qui, par la position de sa sortie, se prête bien à la réalisation d'une boîte-pont, mais le dispositif reste fondamentalement le même dans le cas où on disposerait l'accouplement de sortie de la vitesse angulaire à l'arrière.

En outre, il est bien évident que l'emplacement du convertisseur à l'opposé de l'entrée par rapport aux trains planétaires n'est pas impératif, ledit convertisseur pouvant être disposé en premier, devant lesdits trains, sans changer la nature de l'invention.

## Revendications

1. Transmission à variation continue du rapport de transmission notamment pour véhicules automobiles, comportant un arbre d'entrée (A, 21), deux trains planétaires (D1, D2; 22, 23) et un convertisseur de couple hydrocinétique (C24), un planétaire (6 ou 25) du premier train D1 ou 22) étant lié en rotation avec un planétaire (15 ou 30) du second train (D2 ou 23) par une première transmission intermédiaire (F), l'un des autres éléments du premier train (D1 ou 22) étant lié en rotation avec l'un des autres éléments du second train (D2 ou 23) par une seconde transmission intermédiaire (E), le troisième élément (16 ou 32) du second train (D2 ou 23) transmettant le couple en sortie, caractérisé en ce que l'arbre d'entrée (A ou 21) mène simultanément le porte-satellites (2 ou 28) du premier train (D1 ou 22) et l'impulseur (19 ou 35) du convertisseur de couple, en ce que la turbine (20 ou 36) du convertisseur de couple est liée en rotation avec la transmission intermédiaire (E).

2. Transmission selon la revendication 1, caractérisée en ce que les planétaires des deux trains (D1 et D2) sont égaux en diamètre et en ce que le porte-satellites (12) du second train (D2) est accouplé au second planétaire (5) du premier train (D1) tandis que le second planétaire (16) du second train (D2) transmet le couple en sortie.

3. Transmission selon la revendication 2, caractérisée en ce que l'accouplement entre le porte-satellites (12) du second train (D2) et le second planétaire (5) du premier train (D1) est constitué par une transmission réductrice, induisant un sens de rotation du porte-satellites (12) du second train, inverse du sens de rotation du planétaire (5) du premier train.

4. Transmission selon la revendication 1, caractérisée en ce que les trains planétaires sont des trains épicycloïdaux juxtaposés coaxialement avec le convertisseur, en ce que le pignon central (25) du premier train (22) est solidaire en rotation de la couronne (30) du second train et accouplé en rotation de la turbine (36) du convertisseur, tandis que le pignon central (29) du second train (23) est solidaire en rotation de la couronne externe (26) du premier train, et en ce que l'accouplement en sortie s'effectue sur le porte-satellites (32) du second train (23).

5. Transmission selon la revendication 4, caractérisée en ce qu'elle comporte un train planétaire supplémentaire (40) multiplicateur interposé entre, d'une part, la turbine (36) du convertisseur et, d'autre part, le pignon central (25) du premier train (22) et la couronne (30) du second train (23).

6. Transmission selon la revendication 5, caractérisée en ce que ledit train supplémentaire (40) a son porte-satellites (43) solidaire en rotation de la turbine (36) du convertisseur, son pignon planétaire central (41) solidaire en rotation du pignon central (25) du premier train (22) et de la couronne (30) du second train (23), et sa couronne planétaire extérieure (42) immobilisée en rotation.

## Claims

1. A transmission having an infinitely variable speed ratio, notably for automotive vehicle, comprising an input shaft (A1), two planetary gear trains (D1, D2; 22, 23) and a hydrokinetic torque converter (C–24), a planetary gear (6 or 25) of the first planetary gear train (D1 or 22) being connected for rotation with a planetary gear (15 or 30) of the second planetary gear train (D2 or 23) by a first intermediate transmission link (F), one of the other elements of the first planetary gear train (D1 or 22) being connected for rotation with one of the other elements of the second planetary gear train (D2 or 23) by a second intermediate transmission link (E), the third element (16 or 32) of the second planetary gear train (D2 or 23) transmitting the torque on the output shaft, wherein said the input shaft (A or 21) simultaneously drives the satellite carrier (2 or 28) of the first planetary gear train (D1 or 22) and the impeller (19 or 35) of the hydrokinetic torque converter is connected for rotation with the intermediate transmission (E).

2. The transmission according to claim 1, wherein said the diametre of the planetary gear of the two planetary gear trains (D1 and D2) are equal and wherein said the satellite carrier (12) of the second planetary gear train (D2) is coupled for rotation to the second planetary gear (5) of the first planetary gear train (D1) whereas the second planetary gear (16) of the second planetary gear train (D2) transmit the torque on the output shaft.

3. The transmission according to claim 2, further comprising a speed reducing transmission link coupling said satellite carrier (12) of said second planetary gear train (D2) and said second planetary gear (5) of said first planetary gear train (D1), said speed reducing transmission link being adapted to induce a sens of rotation of the satellite carrier (12) of the second planetary train (D2) inverse of the sens of rotation of the planetary gear (5) of the first planetary gear train (D1).

4. The transmission according to claim 1, wherein said first and second planetary gear trains are epicyclic gear trains juxtaposed coaxially to said converter, said first gear train having a central gear fixed for rotation with a ring gear of said second gear train and coupled for rotation with said runner of said converter, said second gear train having a central gear fixed for rotation withe ring gear of said first gear train, the output of said transmission being coupled to a satellite carrier of said second gear train.

5. The transmission according to claim 4, further comprising an additional, speed increasing planetary gear train interposed between said runner of said converter and said central gear of said first planetary gear train and said gear of said second planetary gear train.

6. The transmission according to claim 5, wherein said additional planetary gear train has a satellite carrier fixed for rotation with said central gear of said first planetary gear train, said ring gear of said second gear train being held against rotation.

**Patentansprüche**

1. Getriebe mit kontinuierlicher Änderung des Übersetzungsverhältnisses insbesondere für Kraftfahrzeuge mit einer Eingangswelle (A, 21), zwei Planetenradzügen (D1, D2 oder 22, 23) und einem hydrokinematischen Momentwandler (C–24), einem Planetenrad (6 oder 25) des ersten Zuges (D1 oder 22) verbunden beim Umlauf mit einem Planetenrad (15 oder 30) des zweiten Zuges (D2 oder 23) aus einem ersten zwischenliegenden Getriebe (F), während eines der anderen Elemente des ersten Zuges (D1 oder 22) verbunden ist beim Umlauf mit einem der anderen Elemente des zweiten Zuges (D2 oder 23) aus einem zweiten zwischenliegenden Getriebe (E), während das dritte Element (16 oder 32) des zweiten Zuges (D2 oder 23) das Ausgangsmoment überträgt, dadurch gekennzeichnet, dass die Eingangswelle (A oder 21) gleichzeitig den Planetenradzug (2 oder 28) des ersten Zuges (D1 oder 22) und die Impulsgeber (19 oder 35) des Momentwandlers mitnimmt und dadurch gekennzeichnet, dass die Turbine (20 oder 26) des Momentwandlers beim Umlauf verbunden ist mit dem zwischenliegenden Getriebe (E).

2. Getriebe nach Anspruch 1, dadurch gekennzeichnet, dass die Planetenräder der zwei Züge (D1 und D2) die gleichen Durchmesser haben und dass das Satelittenrad (12) des zweiten Zuges (D2) gekuppelt ist mit dem zweiten Planetenrad (5) des ersten Zuges (D1), während das zweite Planetenrad (16) des zweiten Zuges (D2) das Ausgangsmoment überträgt.

3. Getriebe nach Anspruch 2, dadurch gekennzeichnet, dass die Kupplung zwischen den Satellitenrädern (12) des zweiten Zuges (D2) und das zweite Planetenrad (5) des ersten Zuges (D1), aus einem Reduziergetriebe besteht, das den Drehsinn des Satellitenrades (12) des zweiten Zuges umkehrt, in bezug auf den Drehsinn des Planeten rades des ersten Zuges.

4. Getriebe nach Anspruch 1, dadurch gekennzeichnet, dass die Planetenzüge epizyklische, nebeneinander gelegte Züge koaxial mit dem Drehmomentwandler sind, dass das zentrale Zahnrad (5) des ersten Zuges (22) beim Umlauf fest mit dem Zahnkranz (30) des zweiten Zuges verbunden und beim Umlauf mit der Turbine (36) des Wandlers gekuppelt ist, während das zweite Zahnrad (29) des zweiten Zuges (23) beim Umlauf fest mit dem äusseren Zahnkranz (26) des ersten Zuges verbunden ist und dass die Kupplung am Ausgang sich auf das Satellitenrad (32) des zweiten Zuges (23) auswirkt.

5. Getriebe nach Anspruch 4, dadurch gekennzeichnet, dass es ein einen Planetenzug ergänzendes Übersetzungsgetriebe (40) einschliesst, welches einerseits zwischen der Turbine (36) des Wandlers und andererseits dem zentralen Zahnrad (25) des ersten Zuges (22) und dem Zahnkranz (30) des zweiten Zuges (23) liegt.

6. Getriebe nach Anspruch 5, dadurch gekennzeichnet, dass der ergänzende Zug bzw. das Übersetzungsgetriebe (40) ein Satellitenrad (43) hat, welches beim Umlauf fest mit der Turbine (36) des Wandlers verbunden ist, dessen zentrales Planetenrad (41) beim Umlauf fest mit dem zentralen Zahnrad (25) des ersten Zuges (22) und dem Zahnkranz (30) des zweiten Zuges (23) verbunden ist und dessen äusserer Planetenzahnkranz (42) beim Umlauf unbeweglich ist.

**FIG.1**

**FIG.2**

**FIG.3**

0 014 139

FIG.4

FIG.5